(19)

**Europäisches Patentamt**
**European Patent Office**
**Office européen des brevets**

(11) **EP 4 775 713 A1**

(12) **EUROPEAN PATENT APPLICATION**
published in accordance with Art. 153(4) EPC

(43) Date of publication:
**15.07.2026 Bulletin 2026/29**

(21) Application number: **25739450.2**

(22) Date of filing: **07.07.2025**

(51) International Patent Classification (IPC):
*C25B 15/02* (2021.01)   *C25B 9/70* (2021.01)
*C25B 15/023* (2021.01)   *C25B 15/027* (2021.01)
*G01S 15/08* (2006.01)

(52) Cooperative Patent Classification (CPC):
**C25B 1/04; C25B 9/70; C25B 15/02; C25B 15/023;
C25B 15/027; G01S 15/08;** Y02E 60/36

(86) International application number:
**PCT/CN2025/107283**

(87) International publication number:
**WO 2026/097912 (15.05.2026 Gazette 2026/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **11.11.2024   CN 202411595627
30.06.2025   CN 202510888657**

(71) Applicant: **Jiangsu Shuangliang Hydrogen
Energy Technology
Co., Ltd.
Wuxi, Jiangsu 214400 (CN)**

(72) Inventors:
• JIANG, Rongfang
  **Wuxi, Jiangsu 214400 (CN)**

• ZHANG, Yu
  **Wuxi, Jiangsu 214400 (CN)**
• LIU, Guilin
  **Wuxi, Jiangsu 214400 (CN)**
• YU, Jing
  **Wuxi, Jiangsu 214400 (CN)**
• ZHANG, Hengbiao
  **Wuxi, Jiangsu 214400 (CN)**
• ZHAO, Yan
  **Wuxi, Jiangsu 214400 (CN)**
• FENG, Shiming
  **Wuxi, Jiangsu 214400 (CN)**
• LIU, Xiao
  **Wuxi, Jiangsu 214400 (CN)**
• YAO, Junjie
  **Wuxi, Jiangsu 214400 (CN)**

(74) Representative: **Bardehle Pagenberg S.L.
Avenida Diagonal 598, 3º, 1ª
08021 Barcelona (ES)**

(54) **METHOD AND MONITORING SYSTEM FOR CONTROLLING SAFE OPERATION OF ALKALINE WATER ELECTROLYZER**

(57)    The present invention relates to the technical field of alkaline water electrolyzers for hydrogen production, in particular to a method and monitoring system for safe operation control of an alkaline water electrolyzer. The method includes: mounting at least one disc spring deformation monitoring instrument at a disc spring of the alkaline water electrolyzer to monitor the deformation of the disc spring and provide a safe operation control signal source of the electrolyzer; making a control judgment according to the deformation of the disc spring monitored by the disc spring deformation monitoring instrument to judge whether the electrolyzer is within a safe operation range; and triggering a stop signal to stop the operation of the electrolyzer when the deformation of the disc spring exceeds a specified safe use range. According to the present invention, safety problems caused when the electrolyzer operates can be effectively found, and a judgment for electrolyzer maintenance can be made in time to guarantee the safe operation of the electrolyzer.

EP 4 775 713 A1

Fig. 2

## Description

TECHNICAL FIELD

The present invention relates to the technical field of alkaline water electrolyzers for hydrogen production, in particular to a method and ranging monitoring system for safe operation control of an alkaline water electrolyzer.

BACKGROUND ART

There are often phenomena of alkali leakage and gas leakage in the current alkaline water electrolyzer (a water electrolytic hydrogen production device) during operation, and in severe cases, explosion may occur to damage the electrolyzer. A main reason for alkali leakage is that there are hundreds of spacers and electrode frames that are combined on an alkaline electrolyzer, the spacers are mainly made of polytetrafluoroethylene which is relatively poor in creep resistance and will be continuously thinned during use. After the spacers are thinned, disc springs in a disc spring assembly serving as electrolyzer fastening devices will deform, the strengths of the disc springs will be lowered, and a fastening force will be decreased. When a tightening force ( the fastening force) is less than a safe range, alkali will be leaked from the electrolyzer.

Once the electrolyzer leaks, especially, when an alkaline liquor is leaked during operation, the electrolyzer is easily short-circuited to be burnt, in severe cases, hydrogen leaks and encounters an open fire to cause explosion, the service life of the electrolyzer is seriously shortened, and therefore, online real-time measurement and monitoring for the deformation of the disc springs are required, possible electrolyzer leakage is pre-warned in advance, timely shutdown is performed for maintenance or it is realized in advance that requisite measures should be taken to solve hazards caused by the deformation of the disc springs.

In addition, when the water electrolytic hydrogen production device operates, the following problems are easily caused: during operation, there are more superimposed electrolytic cells, which makes the electrolyzer longer. Heat will be released by an electrolytic reaction, which results in the rise of an internal temperature of the electrolyzer. The change of the temperature not only affects the electrolysis efficiency and the gas production, but also causes the structural change of the electrolyzer, and especially the stretching of a length in an axial direction. The sealing property, electrode spacing and diaphragm property of the electrolyzer are all greatly affected by axial stretching. The axial stretching may result in stress change of sealing spacers of the electrolyzer to affect a sealing effect. If a sealing element cannot adapt to the stretching caused by the temperature change, electrolyte leakage or gas escape may be caused to affect the safety and reliability of a system.

The axial stretching will affect a distance, i.e., the electrode spacing, between an anode plate and a cathode plate. The change of the electrode spacing will affect the resistance of the electrolyzer, and then affect the electrolytic efficiency and energy consumption. If the electrode spacing is increased, the resistance is increased, and the electrolytic efficiency is reduced; and vice versa. The stretching of a diaphragm in an axial direction may affect its physical and chemical properties. If the material of the diaphragm cannot adapt to the stretching caused by the temperature change, diaphragm breakage or deformation may be caused to affect a hydrogen and oxygen separation effect. At the same time, in a usual working state, disc springs on an electrolyzer fastener may seriously deform due to overlong use time, overhigh load or other reasons, thereby enlarging an electrolyzer spacing to cause leakage.

Therefore, it is particularly important to measure a spacing between key components of the electrolyzer when the water electrolyzer works. At present, artificial tape measurement has been adopted in most of electrolyzer ranging methods, on one hand, the measurement precision is insufficient, and on the other hand, safety problems may be caused due to touch with the electrolyzer during artificial ranging.

SUMMARY OF THE INVENTION

In order to solve the above-mentioned problems, the present invention provides a method and ranging monitoring system for safe operation control of an alkaline water electrolyzer, which aim at realizing safety pre-warning for an operation state of the alkaline water electrolyzer, thereby improving the operation safety of the alkaline water electrolyzer and prolonging the service life of the alkaline water electrolyzer. Specific technical solutions are shown as follows: provided is a method for safe operation control of an alkaline water electrolyzer, including: mounting at least one disc spring deformation monitoring instrument at disc springs of the alkaline water electrolyzer to monitor the deformation of the disc springs and provide a safe operation control signal source for the electrolyzer.

The monitoring the disc springs by the disc spring deformation monitoring instrument includes: monitoring the axial stretching deformation of the disc springs.

Preferably, the disc spring deformation monitoring instrument adopts one or more disc spring deformation monitoring sensors including an infrared ranging sensor, a laser ranging sensor, an ultrasonic ranging sensor and a radar ranging sensor.

Preferably, the disc spring deformation monitoring instrument adopts a travel switch or other instruments capable of measuring a distance.

Preferably, when the number of the disc spring deformation monitoring sensors is equal to or greater than 2, the disc spring deformation monitoring sensors are in spaced arrangement, adjacent arrangement or superimposed arrangement along a circumferential direction of the alkaline water electrolyzer close to a disc spring assembly.

Preferably, a contact of the travel switch is close to an axial displacement portion caused by deformation on one of positions on the alkaline water electrolyzer; and when the axial displacement of the axial displacement portion of the alkaline water electrolyzer exceeds a preset safe threshold, the axial displacement portion touches the contact of the travel switch and triggers the travel switch to act.

In the present invention, the axial displacement portion of the alkaline water electrolyzer includes end pressure plates and axial displacement parts in the disc spring assembly.

In the present invention, the alkaline water electrolyzer is provided with a disc spring deformation monitoring instrument for monitoring the deformation of disc springs, and the disc spring deformation monitoring instrument is connected with a control system for the alkaline water electrolyzer.

In the present invention, a control system for the alkaline water electrolyzer makes a control judgment according to the deformation of the disc springs monitored by the disc spring deformation monitoring instrument to judge whether the electrolyzer is within a safe operation range; and triggers a stop signal to stop the operation of the electrolyzer when the deformation of the disc springs exceeds the specified safe use range.

Provided is a ranging monitoring system for a water electrolytic hydrogen production device, including a left end pressure plate and a right end pressure plate, wherein a plurality of electrolysis chambers are disposed between the left end pressure plate and the right end pressure plate, the left end pressure plate, a middle electrode plate and the right end pressure plate tension and superimpose the plurality of electrolysis chambers by means of a plurality of long bolts to form an electrolyzer main body, one end of each long blot is provided with a disc spring assembly, a monitoring portion of the electrolyzer main body is provided with preset monitoring points in pairs, a detection signal transmitting module or a detection signal receiving module disposed on one of the preset monitoring points is further included, the detection signal transmitting module is used for sending a detection signal for non-contact measurement, and the detection signal receiving module is used for receiving the detection signal; a time measurement module and a data processing module are further included; a triggering signal is generated for the time measurement module respectively while the detection signal transmitting module sends the detection signal and the detection signal receiving module receives the detection signal, the time measurement module calculates a time interval t of the two triggering signals, i.e., a flight time of the detection signal, and the data processing module calculates a spacing l between monitoring portions according to the time interval t and a propagation speed v of the detection signal; a temperature detection portion for monitoring a temperature of the electrolyzer main body is further included, and the temperature T of the electrolyzer main body is measured while distance detection; and a comparative processing system is further included, a database of a theoretical spacing L between corresponding monitoring points at different temperatures of the electrolyzer main body is preset in the comparative processing system; and the comparative processing system receives the temperature T of the electrolyzer main body and the calculated spacing 1, and compares the same with a range of the theoretical spacing L at the corresponding temperature in the database, and when the spacing l exceeds the range of the theoretical spacing L, a warning system is triggered.

Further, the detection signal transmitting module is an ultrasonic ranging sensor, a laser ranging sensor or a radar ranging sensor.

Further, the comparative processing system is connected to a PLC control system for an electrolytic hydrogen production device, so that the PLC control system for the electrolytic hydrogen production device triggers corresponding interlocking according to a comparative processing result; or the PLC control system for the electrolytic hydrogen production device sends a detection command to trigger the periodic detection of the ranging monitoring system. Further, the detection signal transmitting module and the detection signal receiving module are located on the same preset monitoring point, and the other preset monitoring point corresponding to this preset monitoring point is provided with a reflective component.

Further, the detection signal transmitting module and the detection signal receiving module are respectively disposed on the two preset monitoring points of the monitoring portions.

Further, the preset monitoring points are provided with positioning frame structures for erecting the detection signal transmitting module or the detection signal receiving module.

Provided is an application of a ranging monitoring system for a water electrolytic hydrogen production device. Positioning frame structures are disposed on a left end pressure plate and a right end pressure plate, and the ranging monitoring system is used to monitor the change of a distance between the two end pressure plates.

Provided is an application of a ranging monitoring system for a water electrolytic hydrogen production device. A positioning frame structure is disposed on any end pressure plate, the other positioning frame structure is disposed on an electrode frame of a certain electrolysis chamber, and the ranging monitoring system is used to monitor the change of a distance between the end pressure plate and the predetermined electrolysis chamber.

Provided is an application of a ranging monitoring system for a water electrolytic hydrogen production device. Positioning frame structures are respectively disposed on insulating pads on two sides of a disc spring assembly on ends of long bolts, and the ranging monitoring system is used to monitor the size change of the disc spring assembly.

The present invention has the beneficial effects that:

firstly, according to a method and ranging monitoring system for safe operation control of an alkaline water electrolyzer in the present invention, safety problems caused when the electrolyzer operates can be effectively found, and a judgment for electrolyzer maintenance can be made in time to guarantee the safe operation of the electrolyzer and be beneficial to the prolonging of the service life of the alkaline water electrolyzer.

Secondly, according to a ranging monitoring system for a water electrolytic hydrogen production device and a ranging monitoring system in the present invention, a measurement device for the size change of an electrolyzer main body (an internal spacing between end pressure plates) and/or disc springs of the electrolyzer during the operation of the electrolyzer is autonomously and automatically monitored on line. In the present invention, a distance between two preset monitoring points is detected in a non-contact way such as ultrasonic waves, laser and radar, and the present invention has online monitoring and interlocking functions and is beneficial to automatic control on equipment, when it is reflected that the compensation abilities of the disc springs are insufficient due to relatively great size change, a possible leakage situation of the electrolyzer may be pre-warned in advance; and an ultrasonic ranging fixed-point detection system used in the present device is capable of achieving measurement without contact, high in precision, rapid in response and strong in anti-interference capability, and is directly connected with a PLC control system for an electrolytic hydrogen production device to perform a chain reaction so as to protect the entire device.

BRIEF DESCRIPTION OF THE DRAWINGS

Fig. 1 is a schematic structural diagram of an alkaline water electrolyzer in the prior art;
Fig. 2 is a schematic structural diagram of a disc spring deformation monitoring sensor (a ranging sensor) serving as a disc spring deformation monitoring instrument mounted at disc springs of an electrolyzer in a method for safe operation control of an alkaline water electrolyzer;
Fig. 3 is a schematic structural diagram of a disc spring deformation monitoring sensor (a ranging sensor) and a travel switch that serve as a disc spring deformation monitoring instrument mounted at disc springs of an electrolyzer in a method for safe operation control of an alkaline water electrolyzer;

Fig. 4 is a first schematic diagram of a general principle of a ranging monitoring system for a water electrolytic hydrogen production device in the present invention;
Fig. 5 is a second schematic diagram of a general principle of a ranging monitoring system for a water electrolytic hydrogen production device in the present invention;
Fig. 6 is a schematic diagram of a mounting structure of a ranging monitoring system for a water electrolytic hydrogen production device in the present invention;
Fig. 7 is a schematic mounting diagram of a positioning frame structure in embodiment 5 of the present invention;
Fig. 8 is a schematic structural diagram of a section A-A in Fig. 4 of the present invention;
Fig. 9 is a schematic mounting diagram of a positioning frame structure in embodiment 6 of the present invention;
Fig. 10 is a schematic structural diagram of a section A-A in Fig. 6 of the present invention;
Fig. 11 is a schematic mounting diagram of a positioning frame structure in embodiment 7 of the present invention; and
Fig. 12 is a schematic structural diagram of a section A-A in Fig. 7 of the present invention.

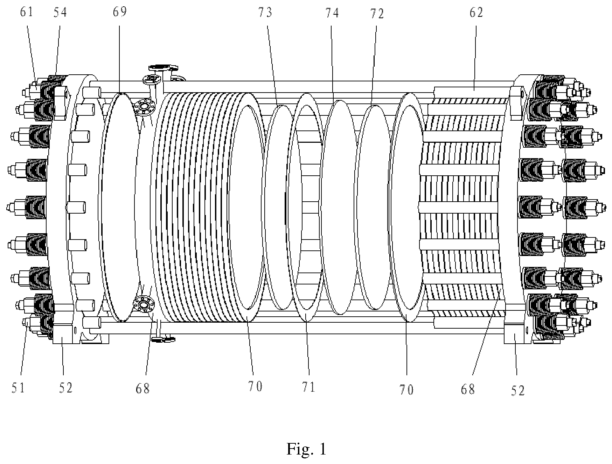

In Fig. 1 to Fig. 3: 51, tightening screw; 52, end pressure plate; 53, disc spring assembly; 54, disc spring; 55, disc spring deformation monitoring sensor (ranging sensor); 56, to-be-detected surface; 57, insulating spacer; 58, fixing ring; 59, pressurized flange guide ring; 60, washer; 61, nut; 62, insulating sleeve; 63, travel switch; 68, end electrode plate; 69, insulating plate; 70, electrode plate; 71, sealing spacer; 72, oxygen evolution electrode; 73, hydrogen evolution electrode; 74, diaphragm.

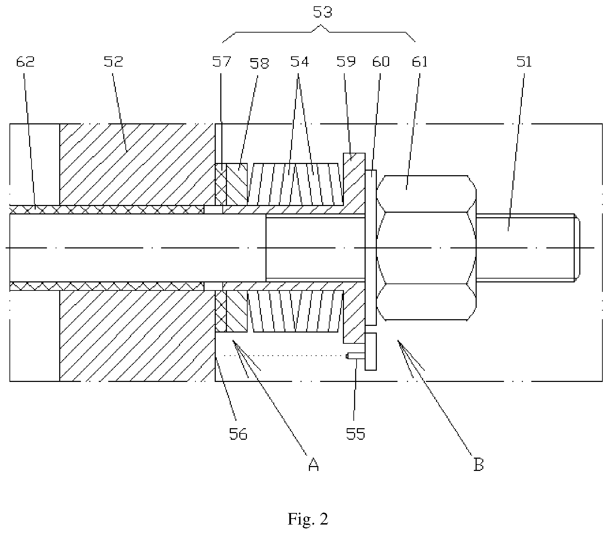

In Fig. 2: A, one end portion of disc spring assembly; and B, the other end portion of disc spring assembly.

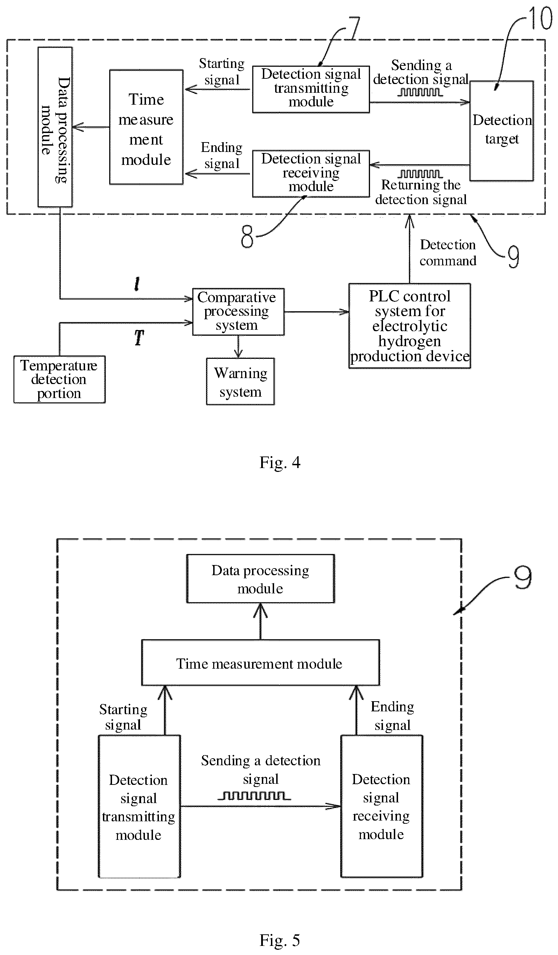

In Fig. 4 to Fig. 12: 1, electrolyzer main body; 2, left end pressure plate; 3, right end pressure plate; 4, long bolt; 5, disc spring assembly; 6, preset monitoring point; 7, detection signal transmitting module; 8, detection signal receiving module; 9, ranging monitoring system; 10, reflective component; 11, positioning frame structure; 12, clamping slot; 13, first side plate; 14, second side plate; 15, bottom plate; 16, U-shaped bayonet; 17, fastening bolt; 18, reinforcing rib plate; 19, guide rail; 20, sliding block; 21, vertical plate; 22, nut; 23, adjusting screw; 24, arc-shaped base plate; 25, first hinge arm; 26, second hinge arm; 27, positioning screw; 28, threaded hole; 29, sensor; 30, insulating pad; 31, lantern ring; and 32, electrode frame.

DETAILED DESCRIPTION OF THE INVENTION

Specific implementations of the present invention will be further described below in conjunction with the accompanying drawings and embodiments. The following embodiments are only intended to describe the technical solutions of the present invention more clearly, rather than to hereby limit the protective scope of the present invention.

Embodiment 1-1:

Refer to Fig. 1, shown is a typical structure of an alkaline water electrolyzer for producing hydrogen by water electrolysis with alkaline water as a raw material, including a plurality of electrode plate parts (including electrode plates 70 and end electrode plates 68) assembled by superimposition, and a sealing spacer 71 is disposed between the adjacent electrode plate parts; two ends of the alkaline water electrolyzer assembled by superimposition are axially tightened and fixed by end pressure plates 52, tightening screws 51, disc springs 54, nuts 61, etc.; wherein the tightening screws 51, fixing rings 58, the plurality of disc springs 54, pressurized flange guide rings 59, the nuts 61 and washers 60 form a disc spring assembly 53 for axially pressing the vs 52 on the alkaline water electrolyzer.

Embodiment 1-2:

As shown in Fig. 1 to Fig. 3, shown is an embodiment of a method for safe operation control of an alkaline water electrolyzer in the present invention, including: at least one disc spring deformation monitoring instrument is mounted at disc springs 54 of the alkaline water electrolyzer to monitor the deformation of the disc springs 54 and provide a safe operation control signal source for the electrolyzer.

The monitoring the disc springs 54 by the disc spring deformation monitoring instrument includes: monitoring the axial stretching deformation of the disc springs 54.

Preferably, the disc spring deformation monitoring instrument adopts one or more disc spring deformation monitoring sensors 55 including an infrared ranging sensor, a laser ranging sensor, an ultrasonic ranging sensor and a radar ranging sensor.

Preferably, the disc spring deformation monitoring instrument adopts a travel switch 63 or other instruments capable of measuring a distance.

Preferably, when the number of the disc spring deformation monitoring sensors 55 is equal to or greater than 2, the disc spring deformation monitoring sensors are in spaced arrangement, adjacent arrangement or superimposed arrangement along a circumferential direction of the alkaline water electrolyzer close to a disc spring assembly 53.

Preferably, a contact of the travel switch 63 is close to an axial displacement portion caused by deformation on one of positions on the alkaline water electrolyzer; and when the axial displacement of the axial displacement portion of the alkaline water electrolyzer exceeds a preset safe threshold, the axial displacement portion touches the contact of the travel switch 63 and triggers the travel switch 63 to act.

In the present embodiment, the axial displacement portion on the alkaline water electrolyzer includes end pressure plates 52 and axial displacement parts in the disc spring assembly 53.

In the present embodiment, the alkaline water electrolyzer is provided with a disc spring deformation monitoring instrument for monitoring the stretching deformation of disc springs, and the disc spring deformation monitoring instrument is connected with a control system for the alkaline water electrolyzer.

In the present embodiment, the control system for the alkaline water electrolyzer makes a control judgment according to the deformation of the disc springs monitored by the disc spring deformation monitoring instrument to judge whether the electrolyzer is within a safe operation range; and triggers a stop signal to stop the operation of the electrolyzer when the deformation of the disc springs exceeds the specified safe use range.

The present embodiment has the beneficial effects that: safety problems caused when the electrolyzer operates can be effectively found, and a judgment for electrolyzer maintenance can be made in time to guarantee the safe operation of the electrolyzer.

Embodiment 1-3:

Refer to Fig. 2, a system for safe operation control of an alkaline water electrolyzer is disposed on the basis of the alkaline water electrolyzer in Fig. 1. The system includes a tightening screw 51 disposed on the alkaline water electrolyzer, a disc spring assembly 53 mounted on an end of the tightening screw 51 and used for pressing against an end pressure plate 52 and a disc spring deformation monitoring sensor 55 for monitoring the axial stretching deformation of disc springs in the disc spring assembly 53, and the disc spring deformation monitoring sensor 55 is connected with a control system for the alkaline water electrolyzer.

When the axial stretching deformation of the disc springs in the disc spring assembly 53 exceeds a set safe threshold, the control system sends warning information and controls the alkaline water electrolyzer to stop operating.

As a first preferred solution of the disc spring deformation monitoring sensor in the present embodiment, the disc spring deformation monitoring sensor 55 is a ranging sensor which monitors the axial stretching deformation of the disc springs in the following mounting ways: the ranging sensor is disposed on one (A or B) of two end portions close to an axial direction of the disc spring assembly 53, a to-be-detected surface 56 is disposed on the other one (B or A) of the two end portions close to the axial direction of the disc spring assembly 53, and a detection probe of the ranging sensor points to the to-be-detected surface 56 along the axial direction, so that the variation of an axial relative distance between the two end portions in the axial direction of the disc spring assembly 53 is monitored, and then, the axial stretching deformation of the disc springs is monitored.

Preferably, a plurality of disc spring deformation monitoring sensors 55 are provided and are in spaced arrangement along a circumferential direction of the alkaline water electrolyzer close to the disc spring assembly 53.

More preferably, the ranging sensor is one of an infrared ranging sensor, a laser ranging sensor, an ultrasonic ranging sensor and a radar ranging sensor.

In the present embodiment, the disc spring assembly 53 includes an insulating spacer 57, a fixing ring 58, a plurality of disc springs 54, a pressurized flange guide ring 59, a washer 60 and a nut 61 that are superimposed and connected in sequence and are externally sleeved on an end of the tightening screw 51, the insulating spacer 57 abuts against an outer side surface of the end pressure plate 52 of the alkaline water electrolyzer; and the end pressure plate 52, the insulating spacer 57 and the fixing ring 58 are used as one of two end portions close to the axial direction of the disc spring assembly 53, and the pressurized flange guide ring 59, the washer 60, the nut 61 and an axial end portion of the tightening screw 51 are used as the other one of the two end portions close to the axial direction of the disc spring assembly 53.

That is, the ranging sensor in the present embodiment can be flexibly mounted on any part in one of the two end portions close to the axial direction of the disc spring assembly 53, and then, the detection probe of the ranging sensor axially points to to-be-detected surfaces of the corresponding parts located on the other one of the two end portions close to the axial direction of the disc spring assembly 53; and these parts include the end pressure plate 52, the insulating spacer 57 and the fixing ring 58 that are located on one end, also include the pressurized flange guide ring 59, the washer 60, the nut 61 and a shaft end of the tightening screw 51 that are located on the other end, further include the disc springs 54 located on positions abutting against the fixing ring 58 or the pressurized flange guide ring 59, and may be provided with local rigid portions thereon.

Preferably, the above-mentioned parts may be provided with a detection reference plate directly facing the ranging sensor, and the to-be-detected surface is disposed on the detection reference plate.

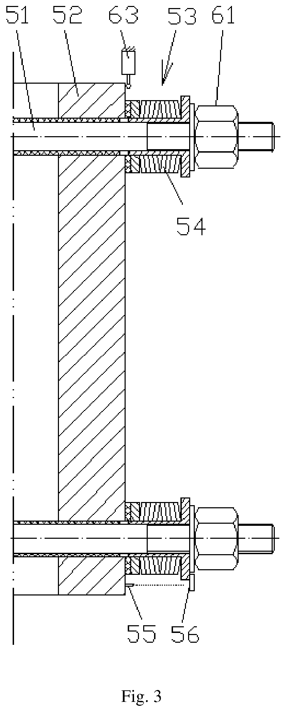

In Fig. 2, the to-be-detected surface is directly disposed on a plane of the end pressure plate; and in Fig. 3, the pressurized flange guide ring 59 is provided with the detection reference plate, the to-be-detected surface is disposed on the plane of the detection reference plate. It should be noted that the detection reference plate may also be disposed on other axial displacement parts of the disc spring assembly, and may be in assembled connection or integrated connection with the axial displacement parts of the disc spring assembly 53.

As a second preferred solution of the disc spring deformation monitoring sensor in the present embodiment, the disc spring deformation monitoring sensor 55 is a visual recognition camera (undrawn in the figure) disposed on one side in a radial direction of the disc spring assembly 53, and a camera probe of the visual recognition camera is aligned to the disc spring assembly 53.

During work, the control system of the alkaline water electrolyzer captures an image of the disc spring assembly 53 on line by means of the visual recognition camera, and recognizes and analyzes axial sizes of the disc springs 54 in the disc spring assembly 53, thereby monitoring the axial stretching deformation of the disc springs.

As a third preferred solution of the disc spring deformation monitoring sensor in the present embodiment, the disc spring deformation monitoring sensor 55 is a travel switch 63 disposed beside the disc spring assembly 53 and used for limiting the deformation of the disc springs; a contact of the travel switch 63 is close to an axial displacement portion caused by thermal deformation on one of positions on the alkaline water electrolyzer, and the axial displacement portion on the alkaline water electrolyzer includes the end pressure plates 52 and the axial displacement parts in the disc spring assembly 53; and when the axial displacement of the axial displacement portion of the alkaline water electrolyzer exceeds a preset safe threshold, the axial displacement portion touches the contact of the travel switch 63 and triggers the travel switch 63 to act, and the control system for the alkaline water electrolyzer controls the electrolyzer to stop operating to guarantee the safety of the electrolyzer.

Preferably, the travel switch may also be replaced with a proximity switch. When the axial displacement of the axial displacement portion of the alkaline water electrolyzer exceeds the preset safe threshold, the axial displacement portion touches the travel switch and sends proximity information to the control system for the alkaline water electrolyzer, and the control system for the alkaline water electrolyzer controls the electrolyzer to stop operating to guarantee the safety of the electrolyzer.

The axial displacement parts in the disc spring assembly 53 include the insulating spacer 57, the disc springs 54 and the fixing ring 58 in the disc spring assembly 53.

The axial displacement of the axial displacement portion of the above-mentioned alkaline water electrolyzer actually corresponds to the axial deformation of the disc springs 54. Therefore, by disposing the travel switch 63, the electrolyzer can be closed in time when the deformation of the disc springs exceeds the preset safe threshold, and thus, the operation safety of the electrolyzer is guaranteed.

Refer to Fig. 3, the contact of the travel switch 63 is disposed on a position close to the plane of the end pressure plate of the alkaline water electrolyzer; when the alkaline water electrolyzer is heated to expand, the end pressure plate 52 on the alkaline water electrolyzer generates axial displacement so that the disc springs 54 generates axial deformation; and when the axial displacement of the end pressure plate (corresponding to the axial deformation of the disc springs 54) exceeds the set safe threshold, the end pressure plate will touch the contact of the travel switch 63 and trigger the travel switch 63 to act due to the axial displacement, and the control system controls the alkaline water electrolyzer to stop operating. When the action of the travel switch 63 is reset, the control system controls the alkaline water electrolyzer to normally operate again.

It should be noted that the contact of the travel switch 63 may also be disposed on the axial displacement parts (such as the pressurized flange guide ring 59) in the disc spring assembly 53. In this case, external diameters of the corresponding axial displacement parts can be appropriately enlarged or extension reference plates enlarged in an external diameter direction are disposed on the corresponding axial displacement parts, so that it is convenient to align the contact of the travel switch 63 to enlarged surfaces of the corresponding axial displacement parts.

Embodiment 2-1:

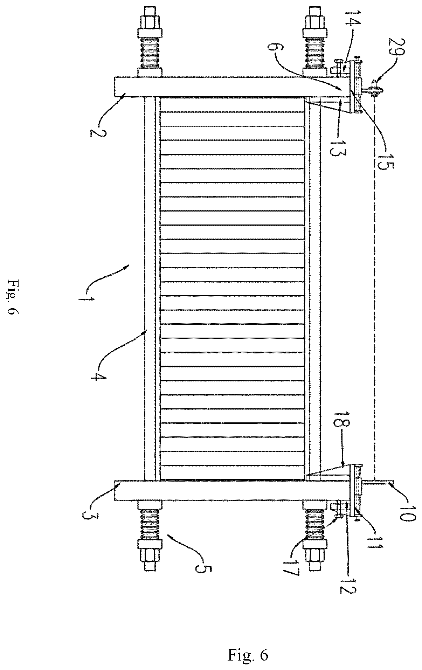

As shown in Fig. 4 to Fig. 12, provided is an embodiment of a ranging monitoring system for a water electrolytic hydrogen production device, including a left end pressure plate 2 and a right end pressure plate 3, wherein a plurality of electrolysis chambers are disposed between the left end pressure plate 2 and the right end pressure plate 3, the left end pressure plate 2, a middle electrode plate and the right end pressure plate 3 tension and superimpose the plurality of electrolysis chambers by means of a plurality of long bolts 4 to form an electrolyzer main body 1, one end of each long blot 4 is provided with a disc spring assembly 5, a monitoring portion of the electrolyzer main body 1 is provided with preset monitoring points 6 in pairs, a detection signal transmitting module 7 or a detection signal receiving module 8 disposed on one of the preset monitoring points 6 is further included, the detection signal transmitting module 7 is used for sending a detection signal for non-contact measurement, in the present embodiment, the detection signal transmitting module 7 and the detection signal receiving module 8 are disposed on the same end, a detection target is located on the other opposite preset monitoring point 6, as shown in Fig. 6, the detection signal transmitting module 7 and the detection signal receiving module 8 are located on the same preset monitoring point 6, and the other preset monitoring point 6 corresponding to this preset monitoring point 6 is provided with a reflective component 10. The detection signal transmitting module 7 is an ultrasonic ranging sensor 29, the present embodiment is based on a pulse echo method, as shown in Fig.

4, the detection signal transmitting module 7 is excited by a triggering signal of a control circuit to generate an ultrasonic pulse, at the time, the system generates a starting signal to be transmitted to a time measurement module, ultrasonic waves are transmitted to an object and are blocked by the object to generate a pulse echo, and the detection signal receiving module 8 is used for receiving the detection signal; the detection signal receiving module 8 receives this signal and sends an ending signal to the time measurement module while receiving the signal, that is, a triggering signal is generated for the time measurement module respectively while the detection signal transmitting module 7 sends the detection signal and the detection signal receiving module 8 receives the detection signal; the time measurement module performs digital calculation on the two signals to obtain a time difference, the time measurement module calculates a time interval t of the two triggering signals, i.e., a flight time of the detection signal, and thus, a flight time of the ultrasonic waves is matched; a sound propagation speed v (a propagation speed of a sound in the air may be calculated, it is assumed that the air temperature is constant at 15°C, and the sound speed is about 340 m/s) is combined, and thus, a distance between a signal transmitting end and a target is a distance l between the two preset monitoring points 6; and a data processing module calculates a spacing l between monitoring portions according to the time interval t and the propagation speed v of the detection signal, which is shown as the following formula:

$$l = \frac{v \times t}{2}.$$

A temperature detection portion for monitoring a temperature of the electrolyzer main body 1 is further included, the temperature T of the electrolyzer main body 1 is measured while distance detection; and the temperature detection portion measures a temperature of an environment where the electrolyzer main body 1 is located, and therefore, on one hand, a speed of a sound wave in this environment can be calculated hereby, and on the other hand, the temperature of the electrolyzer main body 1 can be monitored to determine a change relationship between a corresponding temperature and an elongation of the electrolyzer in subsequent comparative processing.

Specifically, the temperature affects to an ultrasonic ranging precision to a certain extent, generally, when the temperature changes by 1 °C, the sound speed changes by 0.607 m/s, and the change of impacts of the temperature on the ultrasonic waves is compensated as a correction into wave speeds of the ultrasonic waves to reduce impacts of temperature conditions on a ranging result and improve the precision of the present ultrasonic detection system. The present ultrasonic ranging system includes a temperature compensation portion which acquires a temperature of a medium and correct the propagation speed of the ultrasonic waves, thereby improving the ranging precision. The propagation speed of the ultrasonic waves in an actual working condition is calculated according to the following formula:

$$v = 331.4\sqrt{1 + \frac{t + T_0}{273}}$$

in which, t is a temperature of an air medium, with °C serving as a unit; $T_0$ is a constant, and $T_0$=273.16; and a unit of v is m/s.

In the present embodiment, the temperature detection portion collects temperature data in the actual working condition and corrects the sound speed, thereby improving the ranging precision. In the present embodiment, an ultrasonic ranging monitoring system 9 has a measurement range of 20 mm to 10 m and a ranging precision error of ±0.025 mm.

Further, a comparative processing system is further included. As shown in Fig. 4, a database of a theoretical spacing L between corresponding monitoring points at different temperatures of the electrolyzer main body is preset in the comparative processing system; and in an actual operation, a working temperature of the electrolyzer main body 1 changes within a certain range, and therefore, the elongation of the electrolyzer main body 1 also correspondingly changes with the temperature. For example, fastening bolts 17 on two ends of a long bolt 4 connected between the end pressure plates on two sides have been driven to reach an appropriate twisting force when equipment leaves a factory, and thus, a distance between the end pressure plates on the two sides is a calibrated length in an original ex-factory state; and the electrolyzer main body 1 is heated to expand and is cooled to contract under the impacts such as working condition change and environment change during operation, so that a spacing between the end pressure plates on the two sides also changes with the temperature; according to experience such as a long-term practical operation, the temperature change of the electrolyzer main body 1 during operation is edited as a temperature gradient as a reference, when a temperature corresponds to a certain temperature value in the temperature gradient, the spacing between the end pressure plates should be within a certain range, the comparative processing system receives the temperature T of the electrolyzer main body 1 and the calculated spacing 1, and compares the same with a range of the theoretical spacing L at the corresponding temperature in the database, and when the spacing l exceeds the range of the theoretical spacing L, a warning system is triggered. During actual processing, the aforesaid temperature detection portion is also used to detect and evaluate the temperature of the electrolyzer main body 1 and transmit the verified temperature data into the comparative processing system to select the corresponding temperature value from the temperature gradient, and then, distance range values of the end pressure plates in the temperature gradient can be found; the actual spacing l measured by the data processing module according to the ultrasonic ranging system is also transmitted to the comparative processing system by which the theoretical spacing L is compared with the actual spacing l, and if the actual spacing is within the range of the theoretical spacing, the change of the spacing between the end pressure plates is normal; and if the actual spacing exceeds the range of the theoretical spacing, a leakage risk may appear, at the time, a warning signal may be sent to operating personnel by means of the connected warning system.

As a preferred embodiment, the comparative processing system is connected to a PLC control system for an electrolytic hydrogen production device, a distance value between the two preset monitoring points 6 measured by the aforesaid ultrasonic ranging monitoring system 9 may be transmitted to a display panel of the PLC control system so as to be observed by system operating personnel, and the measured distance value and a comparison result may also be used as conditions under which a PLC triggers interlocking, so that the PLC control system for the electrolytic hydrogen production device triggers corresponding interlocking according to a comparative processing result; and specific interlocking operations include, but are not limited to the reduction of the power of the electrolyzer, the increase or reduction of the supply flow of electrolyte, emergency shutdown and other operations.

In practice, the distance between the two preset monitoring points 6 of the monitoring portions may be automatically measured every other a certain period by the ranging monitoring system 9 , or the PLC control system for the electrolytic hydrogen production device sends a detection command to trigger the ranging monitoring system 9 to perform detection.

Embodiment 2-2:

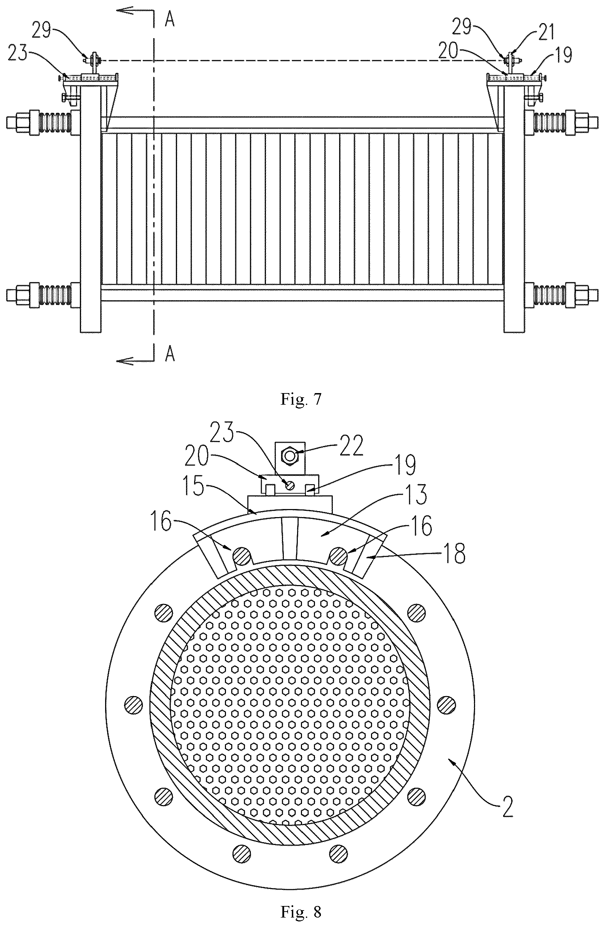

The same as the principle in aforesaid embodiment 1, in the present embodiment, the detection signal transmitting module and the detection signal receiving module in the ranging monitoring system are respectively located on the two preset monitoring points, the detection signal transmitting module and the detection signal receiving module are disposed oppositely, as shown in Fig. 7, the detection signal transmitting module and the detection signal receiving module are respectively disposed on the two preset monitoring points of the monitoring portions. At the time, the distance between the two preset monitoring points is expressed as l=v×t.

Embodiment 2-3:

It can be understood that, in actual use, the ultrasonic waves can be replaced with a laser ranging sensor, and a light signal is used as a detection signal for non-contact measurement; specifically, d is a to-be-measured distance between the two preset monitoring points, c is a light speed, a propagation speed of light in the atmosphere is about $3 \times 10^8$ m/s, t is a flight time spent from the transmission to the reception of a laser pulse, i.e., a time interval between a starting signal and an ending signal. In a pulsed laser ranging system, the time interval t is the number of periods of a clock oscillator between a starting signal and a stopping signal recorded by a clock counter inside the time measurement module, and a frequency of the oscillator determines the time resolution of the counter. The frequency of the clock oscillator is set as f, the clock counter records N oscillation periods, and a distance d can be calculated according to the following formula:

$$d = \frac{cN}{2f}$$

Embodiment 2-4:

It can be understood that, in actual use, the ultrasonic waves may also be replaced with a radar ranging sensor, and an electromagnetic wave signal is used as a detection signal for non-contact measurement; a propagation speed of electromagnetic waves is about a light speed, i.e., about 300,000 km/s. The radar ranging sensor can calculate a distance of a target by measuring a time difference between a transmitted signal and a received echo signal. According to the time difference and the speed of the electromagnetic waves, the distance of the target can be calculated according to a formula:

$$D=(c \times t)/2$$

Wherein D is the distance, c is the propagation speed (about $3 \times 10^8$ m/s) of the electromagnetic waves, and t is the time difference from the transmission to the reception. Being divided by 2 is because the electromagnetic wave travels back and forth once. The division by 2 is due to a fact that the electromagnetic waves travel back and forth once.

Embodiment 2-5:

As an application embodiment of the ranging monitoring system, the preset monitoring points 6 are provided with positioning frame structures 11 for erecting the detection signal transmitting module 7 or the detection signal receiving module 8. Specifically, in the present embodiment, a spacing between end pressure plates on two sides of an electrolyzer body is monitored, as shown in Fig. 7, the left end pressure plate 2 and the right end pressure plate 3 are provided with the positioning frame structures 11, a monitoring portion is the spacing between the end pressure plates on the two sides, the end pressure plates on the two sides are the preset monitoring points 6, and the ranging monitoring system 9 is used to monitor the change of the distance between the two end pressure plates.

Each positioning frame structure 11 includes a clamping slot 12 fixed on the end pressure plate, matched with the end pressure plate in shape and provided with a groove, and the groove is matched with an edge of the end pressure plate in shape. During specific use, if the electrolyzer body is a circular flange-shaped pressure plate, the clamping slot 12 is also of an arc-shaped structure. As shown in Fig. 8, one side of the clamping slot 12 is provided with a first side plate 13, and the other opposite side thereof is provided with a second side plate 14, a bottom plate 15 fitted to the edge of the end pressure plate is disposed between the two side plates, and the bottom plate 15 and the two side plates form the groove-shaped clamping slot 12. Specifically, the first side plate 13 is provided with U-shaped bayonets 16 matched with flange holes in the end pressure plate in position, when the clamping slot 12 is clamped on the end pressure plate, the U-shaped bayonets 16 are clamped on at least two long bolts 4, the number of the U-shaped bayonets is not less than two, so that the clamping slot 12 is positioned by the first side plate 13 by means of positions of the two long bolts 4; and the second side plate 14 on the other side is in threaded connection with a fastening bolt 17. It can be understood that a spacing between the first side plate 13 and the second side plate 14 is greater than the thickness of the end pressure plate; when the clamping slot 12 is buckled, the fastening bolt 17 is screwed, and thus, the end pressure plate is clamped and fixed. Thus, the positioning frame structures 11 can be conveniently mounted on the end pressure plates of the electrolyzer body.

As a preferred embodiment, as shown in Fig. 7, the side plates on the two sides are extended from two sides of the bottom plate 15 to form extended sides, the bottom plate 15 and the extended sides on the two sides form the widened clamping slot 12, triangular reinforcing rib plates 18 are disposed between the extended sides and the two side plates, and thus, deformation caused during clamping is avoided; and meanwhile, the extended sides are also beneficial to position adjustment of the detection signal transmitting module 7 mounted on the upper side.

Specifically, an upper side of the widened clamping slot 12 is provided with a guide rail 19 disposed in an axial direction of the electrolyzer body, the guide rail 19 is slidably provided with a sliding block 20, and transmitting and receiving modules of a ranging detection system are mounted on the sliding block 20. specifically, the sliding block 20 is vertically provided with a vertical plate 21, the vertical plate 21 is provided with a through hole by which a sensor 29 of the ranging monitoring system 9 is mounted, and two sides of the through hole are provided with nuts 22 that are in threaded connection with the sensor 29 and are used for fixation; and an adjusting screw 23 is further provided, the adjusting screw 23 is parallel to the guide rail 19 and is rotatably connected to the clamping slot 12, and the adjusting screw 23 passes through the sliding block 20 and is in threaded connection. Therefore, the position of the sensor 29 can be precisely adjusted by rotating the adjusting screw 23 to make a transmitting window of the sensor 29 flush with an end surface of the end pressure plate, and thus, measurement errors are reduced as much as possible.

Embodiment 2-6:

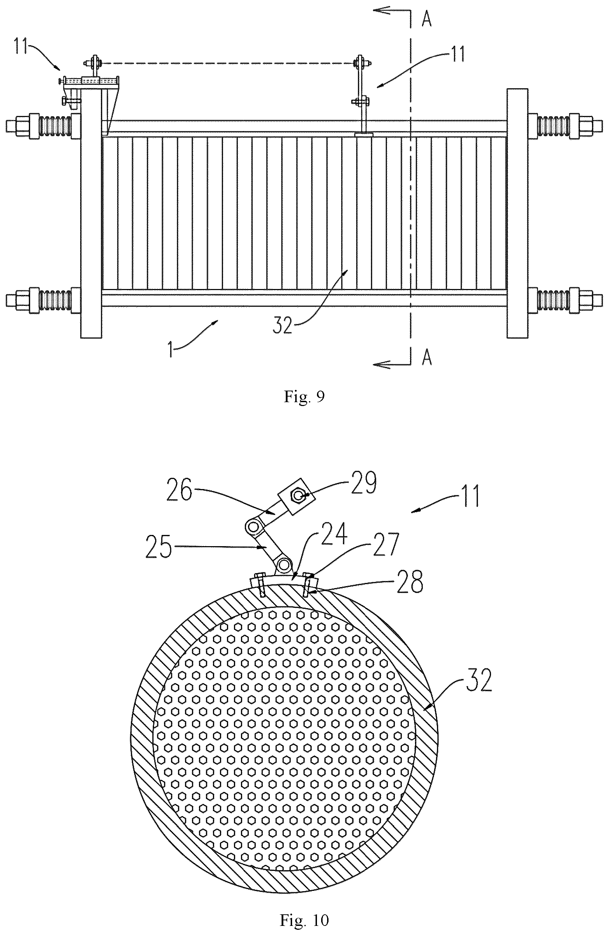

Provided is an application of a ranging monitoring system 9 for a water electrolytic hydrogen production device. A positioning frame structure 11 is disposed on any end pressure plate, as shown in Fig. 9, the other positioning frame structure 11 is disposed on an electrode frame 32 of a certain electrolysis chamber, and the ranging monitoring system 9 is used to monitor the change of a distance between the end pressure plate and the predetermined electrolysis chamber. In the present embodiment, as shown in Fig. 9, a left end pressure plate in the figure is one preset monitoring point 6, a certain electrode frame 32 on the right is the other preset monitoring point 6, and therefore, the two points are respectively provided with the positioning frame structures 11, the positioning frame structure 11 on the left point is the same as the structure in embodiment 5, and the right positioning frame structure 11 includes an arc-shaped base plate 24, a first hinge arm 25 and a second hinge arm 26. As shown in Fig. 10, the arc-shaped base plate 24 is fitted to a surface of the electrode frame 32, a bottom surface of the arc-shaped base plate 24 has the same camber as the surface of the electrode frame 32, the surface of the electrode frame 32 is provided with threaded holes 28, positioning screws 27 penetrate through the arc-shaped base plate 24, and the positioning screws 27 are in threaded connection to the threaded holes 28 to fix the positioning frame structure 11 with the electrode frame 32. It can be understood that the electrode frame 32 of each chamber may be preset with the threaded holes 28 for mounting, thereby facilitating mounting the sensor 29.

A surface of the arc-shaped base plate 24 is provided with a hinge seat, a lower end of the first hinge arm 25 is hinged to the hinge seat, an upper end thereof is hinged with the second hinge arm, the other end of the second hinge arm 26 is provided with a vertical plate 21, and the vertical plate 21 is provided with the sensor 29. Therefore, by disposing the two hinge arms, positions of the sensor 29 in vertical and horizontal directions can be conveniently adjusted, so that the sensor 29 can be opposite to a sensor 29 on the other side.

Embodiment 2-7:

Provided is an application of a ranging monitoring system 9 for a water electrolytic hydrogen production device. Positioning frame structures 11 are respectively disposed on insulating pads 30 on two sides of a disc spring assembly 5 on ends of long bolts 4, and the ranging monitoring system 9 is used to monitor the size change of the disc spring assembly 5. In the present embodiment, the ranging monitoring system 9 is disposed on the disc spring assembly 5, which can facilitate monitoring an extrusion or springback conditions of disc springs, and then hereby judge a stretching deformation allowance of the electrolyzer body.

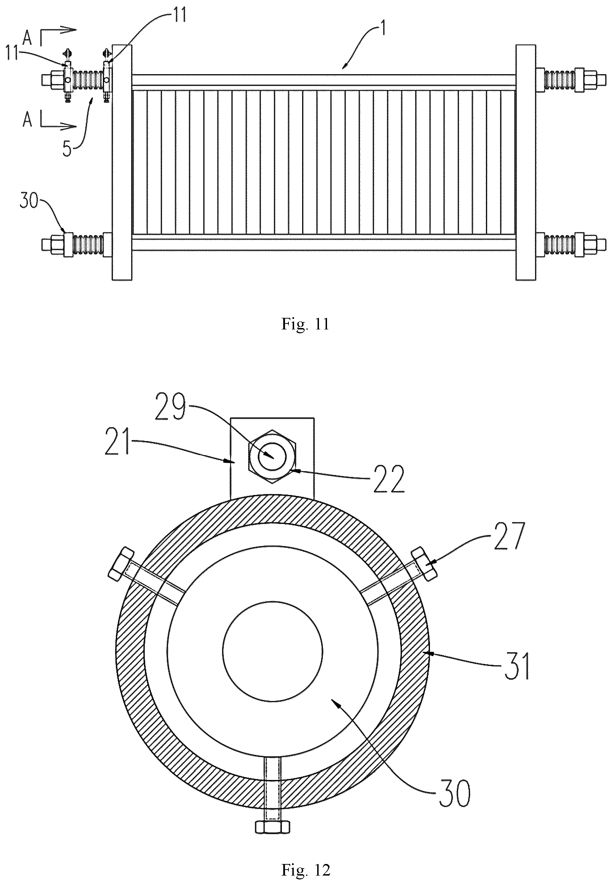

In addition to the plurality of disc springs stacked in the disc spring assembly 5, the insulating pads 30 shaped like circular rings are respectively disposed on two ends of the disc springs. By disposing the sensors 29 on the two insulating pads 30, it is convenient to monitor the variation of the disc spring assembly 5. Specifically, as shown in Fig. 11 and Fig. 12, in the present embodiment, the positioning frame structure is a lantern ring 31, an internal diameter of the lantern ring 31 is greater than that of each insulating pad 30, an outer wall of the lantern ring 31 is provided with a vertical plate 21, and the vertical plate 21 is provided with the sensor; a plurality of positioning screws 27 are in threaded connection after penetrating through the lantern ring 31, the positioning screws 27 are distributed in a circumferential direction, during mounting, the lantern ring 31 is sleeved on the corresponding insulating pad 30, and then, the surrounding positioning screws 27 are gradually screwed to tightly support against the insulating pad 30, thereby fixing the positioning frame structure 11; and then, a spacing between two sides is measured by using a ranging detection system.

The above description only shows preferred implementations of the present invention. It should be noted that those of ordinary skill in the art can further make several improvements and modifications without departing from the technical principle of the present invention, and these improvements and modifications should also be regarded as the protective scope of the present invention.

**Claims**

1.  A method for safe operation control of an alkaline water electrolyzer, comprising: mounting at least one disc spring deformation monitoring instrument at disc springs of the alkaline water electrolyzer to monitor the deformation of the disc springs and provide a safe operation control signal source for the electrolyzer.

2.  The method for safe operation control of an alkaline water electrolyzer of claim 1, wherein the monitoring the disc springs by the disc spring deformation monitoring instrument comprises: monitoring the axial stretching deformation of the disc springs.

3. The method for safe operation control of an alkaline water electrolyzer of claim 1, wherein the disc spring deformation monitoring instrument adopts one or more disc spring deformation monitoring sensors comprising an infrared ranging sensor, a laser ranging sensor, an ultrasonic ranging sensor and a radar ranging sensor.

4. The method for safe operation control of an alkaline water electrolyzer of claim 1, wherein the disc spring deformation monitoring instrument adopts a travel switch or other instruments capable of measuring a distance.

5. The method for safe operation control of an alkaline water electrolyzer of claim 3, wherein when the number of the disc spring deformation monitoring sensors is equal to or greater than 2, the disc spring deformation monitoring sensors are in spaced arrangement, adjacent arrangement or superimposed arrangement along a circumferential direction of the alkaline water electrolyzer close to a disc spring assembly.

6. The method for safe operation control of an alkaline water electrolyzer of claim 4, wherein a contact of the travel switch is close to an axial displacement portion caused by deformation on one of positions on the alkaline water electrolyzer; and when the axial displacement of the axial displacement portion of the alkaline water electrolyzer exceeds a preset safe threshold, the axial displacement portion touches the contact of the travel switch and triggers the travel switch to act.

7. The method for safe operation control of an alkaline water electrolyzer of claim 6, wherein the axial displacement portion of the alkaline water electrolyzer comprises end pressure plates and axial displacement parts in the disc spring assembly.

8. The method for safe operation control of an alkaline water electrolyzer of claim 1, wherein a control judgment is made according to the deformation of the disc springs monitored by the disc spring deformation monitoring instrument to judge whether the electrolyzer is within a safe operation range; and a stop signal is triggered to stop the operation of the electrolyzer when the deformation of the disc springs exceeds the specified safe use range.

9. A ranging monitoring system for safe operation control of an alkaline water electrolyzer, wherein the alkaline water electrolyzer is provided with a disc spring deformation monitoring instrument for monitoring the deformation of disc springs, and the disc spring deformation monitoring instrument is connected with a control system for the alkaline water electrolyzer.

Fig. 1

Fig. 2

Fig. 3

Fig. 4

Fig. 5

Fig. 6

Fig. 7

Fig. 8

Fig. 9

Fig. 10

Fig. 11

Fig. 12

**TRANSLATION**

## INTERNATIONAL SEARCH REPORT

International application No.

**PCT/CN2025/107283**

### A. CLASSIFICATION OF SUBJECT MATTER

C25B15/02(2021.01)i; C25B9/70(2021.01)i; C25B15/023(2021.01)i; C25B15/027(2021.01)i; G01S15/08(2006.01)i

According to International Patent Classification (IPC) or to both national classification and IPC

### B. FIELDS SEARCHED

Minimum documentation searched (classification system followed by classification symbols)

IPC:C25B G01S

Documentation searched other than minimum documentation to the extent that such documents are included in the fields searched

Electronic data base consulted during the international search (name of data base and, where practicable, search terms used)

CNTXT, ENTXTC, VEN, DWPI, ENTXT, CJFD, CNKI, web of science. 江苏双良氢能源, 江荣方, 张羽, 刘桂林, 余婧, 章恒彪, 赵炎, 封士明, 刘枭, 姚俊杰, 碟簧, 蝶簧, 弹性, 片簧, 板簧, 弹簧, 变形, 位移, 形变, 移动, 监测, 检测, 监控, 测量, 封闭, 密封, 泄, 漏, 在线, 实时, Electrolytic, cell, Disc spring, Monitor+, Detect+, Measurement+, Deformat+, Displacement+, Seal+, Leak+, disk spring, spring, real time, Online.

### C. DOCUMENTS CONSIDERED TO BE RELEVANT

| Category* | Citation of document, with indication, where appropriate, of the relevant passages | Relevant to claim No. |
|---|---|---|
| PX | CN 119685880 A (JIANGSU SHUANGLIANG HYDROGEN ENERGY TECHNOLOGY CO., LTD.) 25 March 2025 (2025-03-25)<br>description, paragraphs 17-18 and 41-42, and figure 8 | 1-9 |
| Y | CN 220952089 U (SUNGROW HYDROGEN SCI. & TECH. CO., LTD.) 14 May 2024 (2024-05-14)<br>description, paragraphs 47-104, and figures 1-5 | 1-9 |
| Y | CN 113237643 A (CHINA NUCLEAR POWER OPERATIONS CO., LTD. et al.) 10 August 2021 (2021-08-10)<br>specific embodiments | 1-9 |
| A | CN 117951878 A (ZHANGJIAGANG RESEARCH INSTITUTE OF HYDROGEN ENERGY CO., LTD.) 30 April 2024 (2024-04-30)<br>entire document | 1-9 |

☐ Further documents are listed in the continuation of Box C.    ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **22 October 2025** | **28 October 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**TRANSLATION**

## INTERNATIONAL SEARCH REPORT
### Information on patent family members

International application No.

**PCT/CN2025/107283**

| Patent document cited in search report | | | Publication date (day/month/year) | Patent family member(s) | | | Publication date (day/month/year) |
|---|---|---|---|---|---|---|---|
| CN | 119685880 | A | 25 March 2025 | None | | | |
| CN | 220952089 | U | 14 May 2024 | None | | | |
| CN | 113237643 | A | 10 August 2021 | CN | 113237643 | B | 17 January 2023 |
| CN | 117951878 | A | 30 April 2024 | None | | | |

Form PCT/ISA/210 (patent family annex) (July 2022)